(19) Europäisches Patentamt
European Patent Office
Office européen des brevets

(11) Publication number: **0 193 003**
**A1**

(12) **EUROPEAN PATENT APPLICATION**

(21) Application number: 86101431.4

(22) Date of filing: 04.02.86

(51) Int. Cl.⁴: C 08 L 71/00
C 08 G 65/00, C 08 J 5/06
C 08 K 3/00

(30) Priority: 08.02.85 JP 21991/85
18.02.85 JP 28190/85

(43) Date of publication of application:
03.09.86 Bulletin 86/36

(84) Designated Contracting States:
BE CH DE FR GB IT LI NL SE

(71) Applicant: IDEMITSU KOSAN COMPANY LIMITED
No. 1-1, 3-chome, Marunouchi Chiyoda-ku
Tokyo(JP)

(72) Inventor: Matsuo, Shigeru
1660, Kamiizumi Sodegaura-machi
Kimitsu-gun Chiba-ken(JP)

(72) Inventor: Murakami, Tomoyoshi
1660, Kamiizumi Sodegaura-machi
Kimitsu-gun Chiba-ken(JP)

(74) Representative: Kraus, Walter, Dr. et al,
Patentanwälte Kraus, Weisert & Partner
Thomas-Wimmer-Ring 15
D-8000 München 22(DE)

(54) **Resin composition.**

(57) A resin composition comprising 40 to 97 % by weight of polycyanoaryl ether principally comprised of a repetitive unit represented by Formula (I) below:

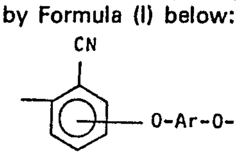

(I)

wherein Ar represents any one of

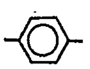 , 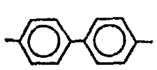 and 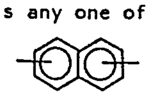

and 3 to 60 % by weight of an additive comprising a reinforcing agent or an inorganic filler. The composition has excellent mechanical strength at high temperature, and is useful as a material for electronic or electric equipments and so on.

EP 0 193 003 A1

Croydon Printing Company Ltd.

# Resin composition

## BACKGROUNG OF THE INVENTION

This invention relates to a resin composition. More particularly, it relates to a resin composition having excellent mechanical properties at high temperature.

Heretofore, for the purpose of improving the thermal resistance of thermoplastic resins, it has been carried out to incorporate an inorganic filler into a resin. However, in the thermoplastic resins such as polysulfone, polyethersulfone, etc. which are usually used, there is a problem that many of them have insufficiency in the thermal resistance of the resins per se, whereby the thermal resistance may not be enhanced so much even when the inorganic filler is mixed. In particular, it often occur that the mechanical strength at high temperature is insufficient.

## SUMMARY OF THE INVENTION

To eliminate the problems conventionally involved in the

art, it is an object of this invention to provide a resin composition which has excellent thermal resistance and mechanical strength, or is capable of retaining sufficient mechanical strength particularly at high temperature.

The present inventors have made a variety of studies to find useful combination of thermoplastic resins with certain additives. As a result, it was found that the above object can be achieved by combining a polycyanoaryl ether having a particular repetitive unit with an additive comprising a reinforcing agent or an inorganic filler which are described in detail hereinbelow, and thus this invention has been accomplished.

Namely, according to this invention, there is provided a resin composition comprising 40 to 97 % by weight of polycyanoaryl ether principally comprised of a repetitive unit represented by Formula (I) below:

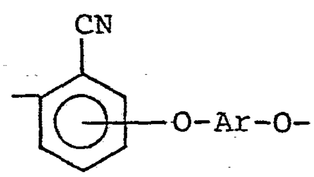

(I)

wherein Ar represents any one of 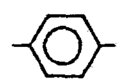 , 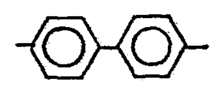 and 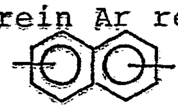

and 3 to 60 % by weight of an additive comprising a reinforcing agent or an inorganic filler.

DESCRIPTION OF THE PREFERRED EMBODIMENTS

The polycyanoaryl ether used in this invention is a polymer principally comprised of a repetitive unit represented by Formula (I) shown above, and preferably

contains 50 mole % or more of the repetitive unit of Formula (I).

In addition to the above repetitive unit of Formula (I), the polymer may further contain a repetitive unit represented by Formula (II) below as a component to form a copolymer.

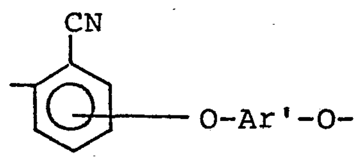 (II)

In the repetitive unit of Formula (II), Ar' may include the following groups:

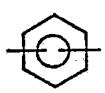 , 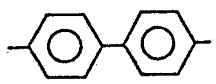 , 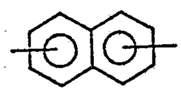 ,

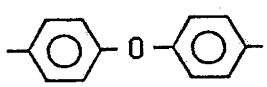 , 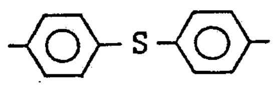 , 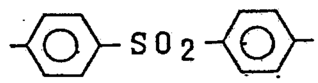 ,

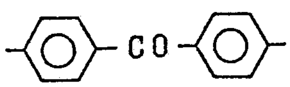 , 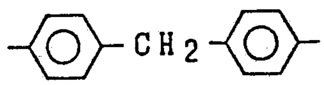 , 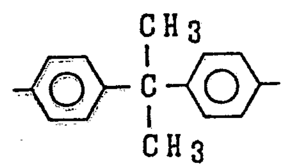

In particular, the groups of 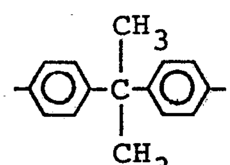 and 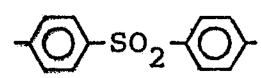 are preferred. This repetitive unit of Formula (II) is contained preferably in amount of 50 mole % or less.

The polycyanoaryl ether may be readily prepared by reacting dihalogenobenzonitrile with an alkali metal salt of bihydric phenol in an aprotic polar solvent. In this reaction, monohydric phenol or monohalogenobenzonitrile may be used as a molecular weight regulator. The polycyanoaryl ether thus obtained has preferably the poylmerization degree such that its reduced viscosity ($\eta sp/c$) is 0.5 dl/g or more at 60°C in a solution prepared by dissolving polycyano ether in a solvent of

p-chlorophenol to have the concentration of 0.2 g/dl.

The reinforcing agent which may be mixed into the polycyanoaryl ether may include carbon fiber, glass fiber, alumina fiber, aromatic polyamide fiber, etc. Of these, carbon fiber and glass fiber are particularly preferred. These fibrous reinforcing agents may be either continuous fiber or non-continuous fiber. For instance, roving, chopped fiber, milled fiber, etc. may be used preferably.

The inorganic filler which may be alternatively mixed into the polycyanoaryl ether may include powder of mica, tulc, calcium carbonate, calcium sulfite, calcium sulfate, calcium silicate, silica, alumina, diatomaceus earth, asbestosi titania, etc. Of these, mica and calcium carbonate are preferred. It is also preferred that the powder has a particle diameter ranging between 100 to 500 μm.

The resin composition according to this invention is obtained by mixing the additive comprising the above reinforcing agent or inorganic filler into the above polycyanoaryl ether. The additive may be mixed in an amount of 3 to 60 % by weight based on the total amount of the resin composition. Accordingly, the balance comprises 97 to 40 % by volume of polycyanoaryl ether, as a matter of course. If the additive is mixed in an amount less than 3 % by weight, no sufficient effect to improve the thermal resistance and the mechanical strength will be obtained. On the other hand, if the additive is mixed in an amount exceeding 60 % by weight, the resin composition will be hard to melt flow, or the inorganic filler will not be uniformly dispersed in polycyanoaryl ether, diadvantageously. The additive may be mixed preferably in an amount of 10 to 40 % by weight

when the reinforcing agent is used, or 20 to 50 % by weight when the inorganic filler is used.

In preparing the resin composition, the additive comprising the reinforcing agent or the inorganic filler may be mixed into the polycyanoaryl ether in the amount prescribed above, followed by melt kneading according to a conventional method. The melt kneading may be carried out at 350 to 410°C, preferably 370 to 400°C, when the reinforcing agent is used as the additive, or at 360 to 400°C, preferably 370 to 390°C, when the inorganic filler is used as the additive. Kneading time may range between 1 and 10 minutes, preferably 2 to 5 minutes.

This invention will be described in greater detail but by no means limited by the following Examples.

Example 1

(1) Preparation of polycyanoaryl ether:

Into a separable flask having internal volume of 5 lit. and equipped with a stirring device, a rectifying device and an argon gas-blowing pipe, charged were 344.02 g (2.0 moles) of 2,6-dichlorobenzonitrile, 317.2 g (1.98 moles) of 2,7-dihydroxynaphthalene and 330 g (2.4 moles) of potassium carbonate, and further charged were 2.5 lit. of sulfolan and 1 lit. of toluene as solvents, to carry out a reaction at 160°C for 2 hours while blowing argon gas through the pipe and at 200°C for two hours with stirring. Water produced during the reaction was continuously evaporated together with toluene. After completion of the reaction, the reaction product was cooled to room temperature, and then put into methanol to recover a polymer precipitated, which was then ground with use of a blender manufactured by Warning Co.,

followed by washing with 2 lit. of hot water and 2 lit. of water, respectively, to obtain 515 g of polycyanoaryl ether represented by the following formula: (100 % yield)

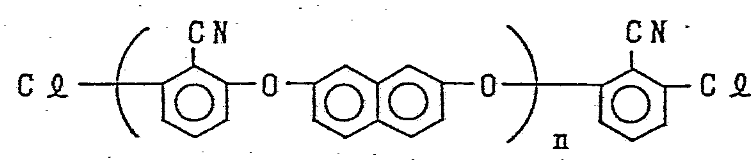

(III)

The polymer obtained had the reduced viscosity (ηsp/c) of 0.95 dl/g at 60°C in a solution prepared by dissolving it in a solvent of p-chlorophenol to have the concentration of 0.2 g/dl. Also, thermal properties of this polymer were measured to find that it had a glass transition point of 214°C and a thermal decomposition-initiating temperature of 499°C. Further, this polymer had excellent flame retardancy.

(2) Preparation of a resin composition:

Into a powder of polycyanoaryl ether obtained in the above (1), carbon fiber (produced by Toray K.K.; trademark: TORECA) having a thread diameter of 9 μm, a mean fiber length of 3 mm and an aspect ratio of 250 was incorporated as a reinforcing agent so as to be contained in an amount of 10 % by weight based on the total amount of the composition, followed by mixing with use of a Henschel mixer. Thereafter, the mixture was kneaded and extruded at a cylinder temperature of 370 to 400°C with use of a biaxial extruder having a cylinder of 30 mm in diameter to form pellets. Subsequently, with use of an injection molding machine, a test piece was formed from this pellets at a cylinder temperature of 370 to 400°C and a mold temperature of 140°C. The test piece obtained was annealed at 200°C for 2 hours, and then subjected to tensile testing and measurements of heat distortion temperature. The heat distortion temperature was

measured with use of a thermal deformation measuring device manufactured by Toyo Seiki K.K., while the tensile testing was carried out with use of an autograph IS-5000 manufactured by Shimazu Seisakusho K.K. to measure the breaking strength, the breaking extensions and the elasticity modulas, respectively, under the stress rate of 1 mm/min. Measurement results of the foregoing are shown in Table 1.

Examples 2 & 3

Test pieces were produced and tested in the same manner as in Example 1, except that the reinforcing agents were mixed in amounts of 20 % by weight and 30 % by weight, respectively. Results are shown in Table 1.

Examples 4 to 6

Test pieces were produced and tested in the same manner as in Example 1, except that glass fiber (produced by Asahi Fiber Glass K.K.) having a mean fiber length of 3 mm was used as the reinforcing agent in place of the carbon fiber. The glass fibers were mixed in amounts of 10, 20 and 30 % by weight, respectively. Results are shown in Table 1.

Comparative Example 1:

A test piece was produced and tested in the same manner as in Example 1, except that the reinforcing agent was not mixed at all. Results obtained are shown in Table 1.

Table 1

| Example | Content of reinforcing agent (wt.%) | Tensile characteristics: Breaking strength ($kg/cm^2$) | Breaking extension (%) | Elasticity modulas ($kg/cm^2$) | Heat distortion temperature (°C) |
|---|---|---|---|---|---|
| 1 | 10 | 1750 | 7 | 47,500 | 248 |
| 2 | 20 | 1900 | 5 | 95,000 | 290 |
| 3 | 30 | 2100 | 3 | 140,000 | >300 |
| 4 | 10 | 1750 | 5 | 39,000 | 232 |
| 5 | 20 | 1800 | 5 | 83,000 | 295 |
| 6 | 30 | 2050 | 4 | 120,000 | >300 |
| Comparative Example 1 | - | 1500 | 20 | 20,000 | 196 |

Examples 7 to 12

Following the procedures in Example 1, 2,6-dichlorobenzonitrile was reacted with potassium salt of hydroquinone in place of 2,7-dihydroxynaphthalene used in Example 1 to obtain polycyanoaryl ether comprising a repetitive unit represented by the formula:

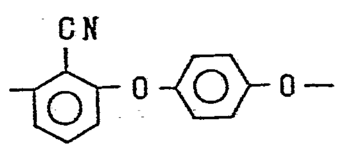

(IV)

The polycyanoaryl ether obtained had the reduced viscosity (ηsp/c) of 1.4 dl/g at 60°C in a solution prepared by dissolving it in a solvent of p-chlorophenol to have the concentration of 0.2 g/dl.

Into this polycyanoaryl ether, carbon fiber same as used

in Example 1 was incorporated so as to be contained in an amount of 10 % (Example 7), 20 % (Example 8) or 30 % (Example 9) by weight, or, in place of the carbon fiber, glass fiber same as used in Examples 4 to 6 was incorporated in an amount of 10 % (Example 10), 20 % (Example 11) or 30 % (Example 12) by weight, respectively, based on the total amount of a resulting mixture. With use of the mixture, a test piece was produced for each of these Examples in the same manner as in Example 1, and the similar measurements were carried out. Results are shown in Table 2.

Comparative Example 2

A test piece was produced and tested in the same manner as in Examples 7 to 12 except that the reinforcing agent was not mixed at all. Results obtained are shown in Table 2.

Table 2

| Example | Content of reinforcing agent (wt.%) | Tensile characteristics: Breaking strength ($kg/cm^2$) | Tensile characteristics: Breaking extension (%) | Tensile characteristics: Elasticity modulas ($kg/cm^2$) | Heat distortion temperature (°C) |
|---|---|---|---|---|---|
| | Carbon fiber | | | | |
| 7 | 10 | 1500 | 5 | 48,000 | 232 |
| 8 | 20 | 1630 | 4 | 90,000 | 295 |
| 9 | 30 | 1850 | 4 | 130,000 | 315 |
| | Glass fiber | | | | |
| 10 | 10 | 1620 | 3 | 36,000 | 210 |
| 11 | 20 | 1700 | 3 | 85,000 | 291 |
| 12 | 30 | 1950 | 3 | 110,000 | 312 |
| Comparative Example | | | | | |
| 2 | - | 1300 | 20 | 18,100 | 170 |

Examples 13 to 18

Following the procedures in Example 1, 2,6-dichlorobenzonitrile was reacted with potassium salt of 4,4'biphenol in place of 2,7-dihydroxynaphthalene used in Example 1 to obtain polycyanoaryl ether comprising a repetitive unit represented by the formula:

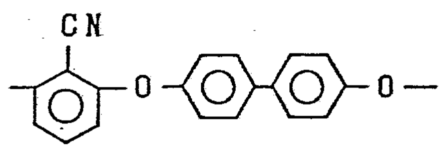

(V)

The polycyanoaryl ether obtained had the reduced viscosity ($\eta$ sp/c) of 1.16 dl/g at 60$^{o}$C in a solution prepared by dissolving it in a solvent of p-chlorophenol to have the concentration of 0.2 g/dl.

Into this polycyanoaryl ether, carbon fiber same as used in Example 1 was incorporated so as to be contained in an amount of 10 % (Example 13), 20 % (Example 14) or 30 % (Example 15) by weight, or, in place of the carbon fiber, glass fiber same as used in Examples 4 to 6 was incorporated in an amount of 10 % (Example 16), 20 % (Example 17) or 30 % (Example 18) by weight, respectively, based on the total amount of a resulting mixture. With use of the mixture, a test piece was produced for each of these Examples in the same manner as in Example 1, and the similar measurements were carried out. Results are shown in Table 3.

Comparative Example 2

A test piece was produced and tested in the same manner as in Examples 13 to 18 except that the reinforcing agent was not mixed at all. Results obtained are shown in Table 3.

Table 3

| Example | Content of reinforcing agent (wt.%) | Tensile characteristics: Breaking strength ($kg/cm^2$) | Breaking extension (%) | Elasticity modulas ($kg/cm^2$) | Heat distortion temperature (°C) |
|---|---|---|---|---|---|
| | Carbon fiber | | | | |
| 13 | 10 | 1250 | 4 | 40,000 | 260 |
| 14 | 20 | 1500 | 6 | 70,000 | 304 |
| 15 | 30 | 1700 | 6 | 120,000 | 326 |
| | Glass fiber | | | | |
| 16 | 10 | 1300 | 4 | 38,000 | 255 |
| 17 | 20 | 1500 | 4 | 64,000 | 297 |
| 18 | 30 | 1600 | 3 | 100,000 | 318 |
| Comparative Example | | | | | |
| 3 | - | 1100 | 43 | 17,000 | 210 |

Example 19

2,6-Dichlorobenzonitrile was reacted with potassium salt of hydroquinone to obtain polycyanoaryl ether comprising a repetitive unit represented by the formula:

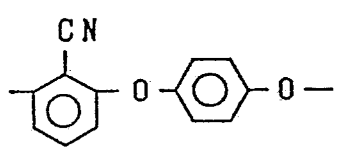

(IV)

The polycyanoaryl ether obtained had the reduced viscosity ( sp/c) of 1.4 dl/g at 60°C in a solution prepared by dissolving it in a solvent of p-chlorophenol to have the concentration of 0.2 g/dl.

Into this polycyanoaryl ether, mica powder of 60 mesh or less was incorporated as an inorganic filler so as to be

contained in an amount of 50 % by weight based on the total amount of a resulting mixture. The mixture was blended with use of a Henschel mixer, and thereafter, with use of a biaxial extruder, kneaded and extruded at a cylinder temperature of 360 to 400$^{o}$C to form pellets. The pellets obtained were subjected to injection molding to produce a test piece, on which measurements of flexural strength and flexural elasticity modulas and a measurement of heat distortion temperature were carried out. Results are shown in Table 4.

Comparative Example 4

A test piece was produced in the same manner as in Example 19, except that mica was not mixed into polycyanoaryl ether, and similar measurements were carried out. Results are shown in Table 4.

Example 20

2,6-Dichlorobenzonitrile was reacted with potassium salt of 4,4'-biphenol to obtain polycyanoaryl ether comprising a repetitive unit represented by the formula:

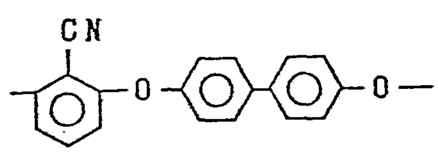

(V)

The polycyanoaryl ether obtained had the reduced viscosity ($\eta sp/c$) of 1.3 dl/g at 60$^{o}$C in a solution prepared by dissolving it in a solvent of p-chlorophenol to have the concentration of 0.2 g/dl.

Into this polycyanoaryl ether, mica powder of 60 mesh or less was incorporated as an inorganic filler so as to be contained in an amount of 50 % by weight based on the

total amount of a resulting mixture. With use of this mixture, a test piece was produced in the same manner as in Example 7, and the similar measurements were carried out. Results are shown in Table 4.

Comparative Example 5

A test piece was produced in the same manner as in Example 20, except that mica was not mixed into polycyanoaryl ether, and similar measurements were carried out. Results are shown in Table 4.

Example 21

2,6-Dichlorobenzonitrile was reacted with potassium salt of 2,7-dihydroxynaphthalene to obtain polycyanoaryl ether represented by the formula:

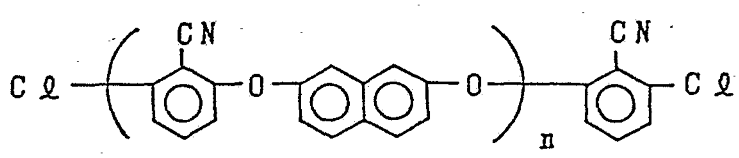

(III)

The polycyanoaryl ether obtained had the reduced viscosity ($\eta sp/c$) of 0.82 dl/g at 60°C in a solution prepared by dissolving it in a solvent of p-chlorophenol to have the concentration of 0.2 g/dl.

Into this polycyanoaryl ether, mica powder of 60 mesh or less was incorporated as an inorganic filler so as to be contained in an amount of 50 % by weight based on the total amount of a resulting mixture. With use of this mixture, a test piece was produced in the same manner as in Example 7, and the similar measurements were carried out. Results are shown in Table 4.

Comparative Example 6

A test piece was produced in the same manner as in Example 21, except that mica was not mixed into polycyanoaryl ether, and similar measurements were carried out. Results are shown in Table 4.

Table 4

| Flexural strength ($kg/cm^2$) | | | Flexural elasticity modulas ($kg/cm^2$) | | | Heat distor- tion temp.(°C) |
|---|---|---|---|---|---|---|
| Room temp. | 100°C | 200°C | Room temp. | 100°C | 200°C | |
| Example 19: | | | | | | |
| 2,400 | 1,500 | 800 | 134,000 | 119,000 | 28,000 | 310 |
| Comparative Example 4: | | | | | | |
| 2,400 | 1,350 | 130 | 35,700 | 26,900 | 630 | 165 |
| Example 20: | | | | | | |
| 1,800 | 1,200 | 750 | 125,000 | 108,000 | 26,000 | 315 |
| Comparative Example 5: | | | | | | |
| 1,800 | 950 | 200 | 29,000 | 22,500 | 450 | 180 |
| Example 21: | | | | | | |
| 3,000 | 1,850 | 960 | 155,000 | 126,000 | 31,000 | 320 |
| Comparative Example 6: | | | | | | |
| 2,900 | 1,600 | 150 | 41,000 | 29,500 | 750 | 180 |

As will be seen from the foregoing descriptions, the resin composition according to this invention, which is obtained by mixing an appropreate amount of an additive comprising a reinforcing agent or an inorganic filler into polycyanoaryl ethe. having particular structure, can attain remarkable increase in the mechanical strength at high temperature, in particular, the flexural elasticity

modulas, as compared with conventional compositions. Accordingly, it is useful as a material for electronic or electric equipments and various kind of machines, and has great industrial values.

Claims:

1. A resin composition comprising 40 to 97 % by weight of polycyanoaryl ether principally comprised of a repetitive unit represented by Formula (I) below:

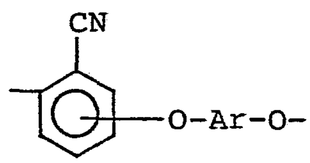

(I)

wherein Ar represents any one of 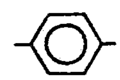 , 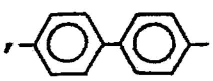 and 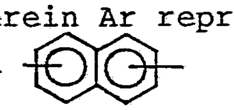

and 3 to 60 % by weight of an additive comprising a reinforcing agent or an inorganic filler.

2. The resin composition according to Claim 1, wherein said polycyanoaryl ether has a reduced viscosity of 0.5 dl/g or more at 60°C in a solution prepared by dissolving polycyano ether in a solvent of p-chlorophenol to have the concentration of 0.2 g/dl.

3. The resin composition according to Claim 1, wherein Ar represents a group of 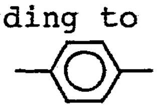 .

4. The resin composition according to Claim 1, wherein Ar represents a group of 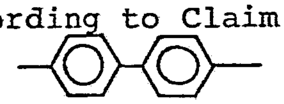 .

5. The resin composition according to Claim 1, wherein Ar represents a group of 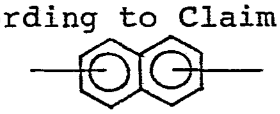 .

6. The resin composition according to Claim 1, wherein said reinforcing agent is selected from the group consisting of carbon fiber, glass fiber, alumina fiber

and aromatic polyamide fiber, and contained in an amount of from 10 to 40 % by weight based on the total amount of the composition.

7. The resin composition according to Claim 1, wherein said inorganic filler is a powder of substance selected from the group consisting of mica, tulc, calcium carbonate, calcium sulfite, calcium sulfate, calcium silicate, silica, alumina, diatomaceus earth, asbestos and titania, and contained in an amount of from 20 to 50 % by weight based on the total amount of the composition.

European Patent Office

# EUROPEAN SEARCH REPORT

0193003

Application number

EP 86 10 1431

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 122 562 (GENERAL ELECTRIC)<br>* Claims; page 18, lines 38-40; page 19, lines 1-40 *<br>----- | | C 08 L 71/00<br>C 08 G 65/00<br>C 08 J 5/06<br>C 08 K 3/00 |
| | | | TECHNICAL FIELDS SEARCHED (Int. Cl.4) |
| | | | C 08 L<br>C 08 G |

The present search report has been drawn up for all claims

| Place of search | Date of completion of the search | Examiner |
|---|---|---|
| THE HAGUE | 29-05-1986 | DERAEDT G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82